(19)

Europäisches
Patentamt
European
Patent Office
Office européen
des brevets

(11)  **EP 3 266 680 B1**

(12)  **EUROPEAN PATENT SPECIFICATION**

(45) Date of publication and mention
of the grant of the patent:
**06.11.2019   Bulletin 2019/45**

(51) Int Cl.:
*B62D 15/02* (2006.01)       *B62D 5/04* (2006.01)
*B62D 3/12* (2006.01)       *B62D 5/00* (2006.01)
*B62D 6/10* (2006.01)

(21) Application number: **16177726.3**

(22) Date of filing: **04.07.2016**

(54) **METHOD AND SYSTEM FOR SAFE LIMITING OF TORQUE OVERLAY INTERVENTION IN AN POWER ASSISTED STEERING SYSTEM OF A ROAD VEHICLE**

VERFAHREN UND SYSTEM ZUR SICHEREN BEGRENZUNG DER DREHMOMENTÜBERLAGERUNGSINTERVENTION IN EINEM SERVOLENKSYSTEM EINES STRASSENFAHRZEUGS

PROCÉDÉ ET SYSTÈME PERMETTANT DE SÉCURISER LA LIMITATION D'UNE INTERVENTION DE SUPERPOSITION DE COUPLE DANS UN SYSTÈME DE DIRECTION ASSISTÉE D'UN VÉHICULE ROUTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2018   Bulletin 2018/02**

(73) Proprietor: **Volvo Car Corporation
40 531 Göteborg (SE)**

(72) Inventors:
• **Silvlin, Jonatan
41501 Göteborg (SE)**
• **Höwing, Mats
448 36 Floda (SE)**

• **Johannesson Mårdh, Lars
423 51 Torslanda (SE)**
• **Nilsson, Malin
417 62 Göteborg (SE)**

(74) Representative: **Kransell & Wennborg KB
P.O. Box 2096
403 12 Göteborg (SE)**

(56) References cited:
**EP-A1- 2 572 964       EP-A1- 2 905 206
WO-A1-2011/002345       WO-A2-02/47945
US-A1- 2011 098 890**

## Description

### Technical field

The present disclosure relates to a method for safe limiting of torque overlay intervention in a power assisted steering system of a road vehicle having an autonomous steering function arranged to selectively apply a steering wheel overlay torque to a normal steering assistance torque.

The disclosure further relates to an arrangement for safe limiting of torque overlay intervention in a power assisted steering system of a road vehicle having an autonomous steering function arranged to selectively apply a steering wheel overlay torque to a normal steering assistance torque.

Still further, the disclosure refers to a road vehicle comprising such an arrangement for safe limiting of torque overlay intervention in a power assisted steering system of a road vehicle having an autonomous steering function arranged to selectively apply a steering wheel overlay torque to a normal steering assistance torque.

### Background

It is known to use power steering in road vehicles, e.g. electrical power assisted steering, commonly abbreviated as EPAS, in a road vehicle such as a car, lorry, bus or truck, wherein an electric motor assists a driver of the road vehicle by adding an assistive torque to e.g. a steering column of the road vehicle.

It is further known to use autonomous steering systems, such as lane keeping aid systems, in order to help a road vehicle driver maintain the road vehicle in a desired lane. For lane keeping aid or lane centering systems where an EPAS is used, a steering wheel torque overlay, i.e. additional steering wheel torque on top of what would have been obtained by the base assist of the EPAS, is used for lateral position control.

However, the need for more advanced autonomous steering functions has pushed the current steering safety concept to its limits. The current safety concepts for collision avoidance functions and driver assistance functions, such as Volvo Car's Lane keeping aid and Pilot assist, are usually based on limiting the maximum torque that could be applied from the EPAS system.

In order to keep the vehicle safe for incorrect interventions the safety torque limit must be set relatively low so that the driver has time to react and take control of the vehicle. As a result, the safety torque limit constrains the scope and performance of all autonomous steering functions.

There is a need for increased torque capability in the overlay torque, e.g. from the Lane Keeping Aid and Pilot Assist functions which help the driver to steer the vehicle safely in lane. The need is due to the ongoing development towards more advanced versions of Pilot Assist with enough torque to handle most highway curves and new functions such as Emergency Lane Keeping Aid (eLKA) which will act to prevent collisions by actively steering away from the threats.

Some current technical safety concepts are very simple in the design. Such safety concepts limits the overlay torque to e.g. 0.5 Nm. However, a torque limit of 0.5 Nm is not enough to manage some steeper curves and in order for e.g. eLKA to reach its full potential at least 1 Nm will be required. Moreover, due to the hazard of unwanted lane departures, without any other safety mechanism it may not be a viable option to increase the torque limit above 0.5 Nm.

Thus, the need for increased torque capability must be balanced against the hazard that the vehicle might move out of lane due to an erroneous overlay torque which is so high that the driver does not have enough time to react and counteract the torque.

In order to handle the demands of these needs, where as exemplified above, the required torque is known to be around twice as high as the current safety torque limit. However, the current safety torque limit will already usually have been set at the very limit of what can be considered safe. Hence, a more sophisticated limitation concept is needed that utilizes more than just a fixed torque limit. EP2905206 A1 is considered as the closest prior art according to the preamble of claims 1 and 6.

### Summary

Embodiments herein aim to provide an improved method for safe limiting of torque overlay intervention in a power assisted steering system of a road vehicle having an autonomous steering function arranged to selectively apply a steering wheel overlay torque to a normal steering assistance torque.

This is provided through a method that comprises the steps of: modeling a wheel self-aligning torque of the road vehicle for a current vehicle velocity and pinion angle; receiving a steering wheel overlay torque request; providing, based on the received steering wheel overlay torque request, a steering wheel overlay torque in hands-off applications limited to a safe set interval that is symmetrical around the modeled wheel self-aligning torque.

According to a second aspect is provided that the method further comprises the step of providing, based on the steering wheel overlay torque request, a steering wheel overlay torque in hands-on applications limited to a safe set interval where a center point of the safe set interval is arranged to follow the steering wheel overlay torque request.

The provision of having a center point of the safe set interval arranged to follow the steering wheel overlay torque request makes it possible to provide an overlay torque having both a positive and a negative sign when an associated vehicle is in a tight curve.

According to a third aspect is provided that the method further comprises the step of determining the safe set interval such that the minimum and maximum allowed torque limits are dependent on both current vehicle velocity and pinion angle.

The provision of determining the safe set interval such that the minimum and maximum allowed torque limits are dependent on both current vehicle velocity and pinion angle facilitates the determination of the minimum and maximum allowed torque limits as signals corresponding to current vehicle velocity and pinion angle normally will be provided with Automotive Safety Integrity Level D (ASIL-D integrity).

According to a fourth aspect is provided that the method further comprises the step of tuning the width of the safe set interval, that decides a maximum magnitude of pinion angle acceleration, such that a driver of an associated road vehicle is given time to intervene and take control of the road vehicle in case of a worst-case fault in the overlay torque.

The provision of tuning the width of the safe set interval, as above, makes it possible to adapt the width appropriately for the specific type of road vehicle in which the method is implemented as the width of the interval will decide the maximum magnitude of the pinion angle acceleration.

According to a fifth aspect is provided that the method further comprises the step of rate limiting an upper and a lower limit of the allowed steering wheel overlay torque interval in order to prevent rapid increase in pinion angle acceleration, such that a driver of an associated road vehicle is given time to intervene and take control of the road vehicle in case of a worst-case fault in the overlay torque.

The provision of rate limiting an upper and a lower limit of the allowed steering wheel overlay torque interval, as above, provide an efficient way of preventing rapid increase in pinion angle acceleration.

According to a sixth aspect is provided an arrangement for safe limiting of torque overlay intervention in a power assisted steering system of a road vehicle having an autonomous steering function arranged to selectively apply a steering wheel overlay torque to a normal steering assistance torque.

This is provided through an arrangement comprising a steering wheel overlay torque controller arranged to: model a wheel self-aligning torque of the road vehicle for a current vehicle velocity and pinion angle; receive a steering wheel overlay torque request; provide, based on the received steering wheel overlay torque request, a steering wheel overlay torque in hands-off applications limited to a safe set interval that is symmetrical around the modeled wheel self-aligning torque.

According to a seventh aspect is provided that the steering wheel overlay torque controller further is arranged to provide, based on the steering wheel overlay torque request, a steering wheel overlay torque in hands-on applications limited to a safe set interval where a center point of the safe set interval is arranged to follow the steering wheel overlay torque request.

The provision of having a center point of the safe set interval arranged to follow the steering wheel overlay torque request makes it possible to provide an overlay torque having both a positive and a negative sign when an associated vehicle is in a tight curve.

According to an eight aspect is provided that the steering wheel overlay torque controller further is arranged to determine the safe set interval such that the minimum and maximum allowed torque limits are dependent on both current vehicle velocity and pinion angle.

The provision of determining the safe set interval such that the minimum and maximum allowed torque limits are dependent on both current vehicle velocity and pinion angle facilitates the determination of the minimum and maximum allowed torque limits as signals corresponding to current vehicle velocity and pinion angle normally will be provided with Automotive Safety Integrity Level D (ASIL-D integrity).

According to a ninth aspect is provided that the steering wheel overlay torque controller further is arranged to tune the width of the safe set interval, that decides a maximum magnitude of pinion angle acceleration, such that a driver of an associated road vehicle is given time to intervene and take control of the road vehicle in case of a worst-case fault in the overlay torque.

The provision of tuning the width of the safe set interval, as above, makes it possible to adapt the width appropriately for the specific type of road vehicle in which the method is implemented as the width of the interval will decide the maximum magnitude of the pinion angle acceleration.

According to a tenth aspect is provided that the steering wheel overlay torque controller further is arranged to rate limit an upper and a lower limit of the allowed steering wheel overlay torque interval in order to prevent rapid increase in pinion angle acceleration, such that a driver of an associated road vehicle is given time to intervene and take control of the road vehicle in case of a worst-case fault in the overlay torque.

The provision of rate limiting an upper and a lower limit of the allowed steering wheel overlay torque interval, as above, provide an efficient way of preventing rapid increase in pinion angle acceleration.

According to an eleventh aspect is provided a road vehicle that comprises an arrangement for safe limiting of torque overlay intervention in a power assisted steering system of a road vehicle having an autonomous steering function arranged to selectively apply a steering wheel overlay torque to a normal steering assistance torque, as above.

The provision of a road vehicle that comprises an arrangement for safe limiting of torque overlay intervention in a power assisted steering system of a road vehicle having an autonomous steering function arranged to selectively apply a steering wheel overlay torque to a normal steering assistance torque, as above, provides for allowing high overlay torque without increasing the risk for unwanted lane departures.

**Brief description of the drawings**

In the following, embodiments herein will be described in greater detail by way of example only with reference to attached drawings, in which

Fig. 1 is a schematic illustration of a semi-autonomous steering system providing temporary steering guidance to help a road vehicle driver stay in a lane travelled.

Fig. 2 is a schematic illustration of how the wheel self-aligning torque for a given set of tires and road friction almost perfectly can be modeled by a speed dependent quadratic function in pinion angle.

Fig. 3 is a schematic illustration of an example of a safe set for hands-off driving at 61 km/h.

Fig. 4 is a schematic illustration of the movement in time of the upper and lower torque limits during an Emergency Lane Keeping Aid intervention.

Fig. 5 is a schematic illustration of an example of the safe set of the safety concept in a hands-on driving application.

Fig. 6 is a schematic illustration of the proposed arrangement for safe limiting of torque overlay intervention in a power assisted steering system of a road vehicle presented herein.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

**Description of embodiments**

To meet the future needs of active safety and driver assistance functions, a new concept has been developed that provides both safety and sufficient performance to enable the most demanding active safety functions that are currently in development.

Thus, this document will present a new technical safety concept which allows high overlay torque without increasing the risk for unwanted lane departures thereby enabling improved versions of Pilot Assist and eLKA.

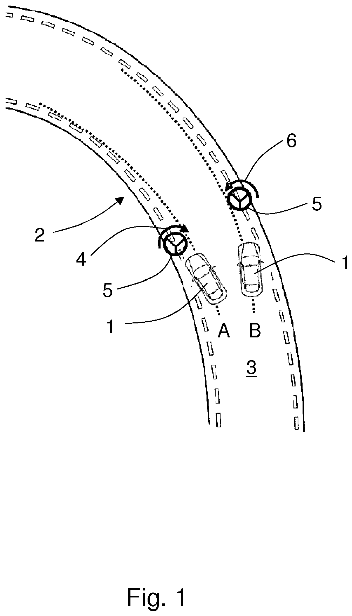

Autonomous Steering Systems, such as lane keeping aid systems may, as illustrated in Figure 1, provide temporary steering guidance to help a road vehicle 1 driver maintain the road vehicle 1 in a desired lane. The term Autonomous Steering is herein used to describe autonomous lateral road vehicle control with driver steering interaction.

Figure 1 schematically illustrates the principles of lane keeping aid interventions in a curve 2. A road vehicle 1 is driven by a driver in a lane 3 and comprises a lane keeping aid system. The lane keeping aid system may assist the driver to keep the vehicle 1 in the center of the lane 3. When being on an inner side of the lane 3 in a curve 2, as in position A of Figure 1, the lane keeping aid system will assist to steer the vehicle 1 towards the center of the lane 3, i.e. against the lane curvature, in Figure 1 illustrated by applying a torque, see arrow 4, to the steering wheel 5 and conversely, when being on an outer side of the lane 3 in a curve 2, as in position B of Figure 1, the lane keeping aid system will assist to steer the vehicle 1 towards the center of the lane 3, i.e. with the lane curvature, in Figure 1 illustrated by applying a torque, see arrow 6, to the steering wheel 5. This additional torque applied by the lane keeping aid system is called overlay torque, hereafter designated $\tau_A$. The overlay torque $\tau_A$ is added to the normal electric steering assistance torque based on an overlay torque request $\tau_R$.

When being on an outer side of the lane 3 in a curve 2, as in position B of Figure 1, the lane keeping aid system will assist to steer the vehicle 1 towards the center of the lane 3, i.e. along the lane curvature, in Figure 1 illustrated by applying a torque, see arrow 6 to the steering wheel 5. The general principles of such a lane keeping aid system are known by the skilled person and will not be explained in any further detail, except for the details differentiating the lane keeping aid system of the invention from that of the state of the art.

For the purpose of the analysis in this document, the steering system can be modeled as

$$J\ddot{\delta}_w = \tau_A + f_B(\tau_D, \cdot) + \tau_D + \tau_F - f_R(\delta_w, v) \tag{1}$$

where $J$ is the inertia in the steering system, $\delta_w$ is the pinion angle of the steering wheel which can be modeled as linearly related to the wheel angle, $\ddot{\delta}_w$ is the pinion angle acceleration, $\tau_A$ is the overlay torque, $\tau_D$ is the driver's mechanical torque which is electrically boosted by the function $f_B$, where $(\cdot)$ denotes that the boost curves might depend on several other inputs, $\tau_F$ is the friction torque, and $f_R$ is the wheel self-aligning torque which primarily depends on the vehicle 1 speed $v$ and the pinion angle $\delta_w$.

The friction in current EPAS systems is usually relatively low with $|\tau_F| < 0.1$ *Nm*. As a consequence the friction is neglected in the following analysis.

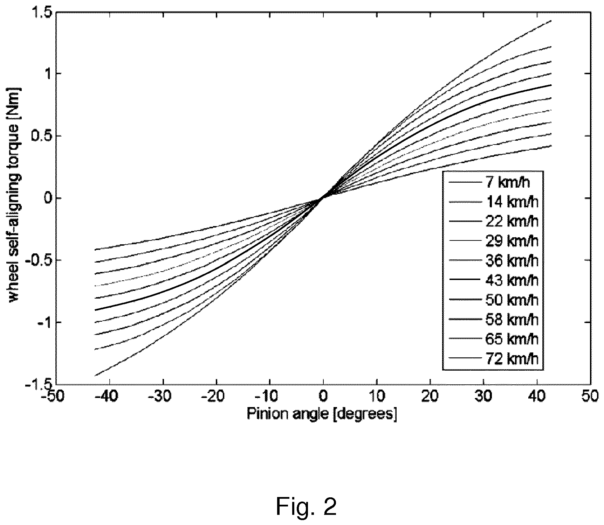

The wheel self-aligning torque $f_R$ can for a given set of tires and road friction almost perfectly be modeled by a speed $v$ dependent quadratic function in pinion angle $\delta_w$, as shown in figure 2, where the curves correspond to the listed vehicle speeds top-to-bottom from left to right, i.e. the uppermost curve starting from the left being for 7 km/h and the lowermost curve for 72 km/h.

The good fit to data is due to the linearity of the well known bicycle model and the fact that the mechanical trail of a tire is linear for the range of wheel angles that are of interest, see "T. D. Gillespie, Fundamentals of Vehicle Dynamics, Society of Automotive Engineers, 1992" for further elaboration.

Moreover, from the bicycle model we can also conclude that the wheel self-aligning torque will be linearly related to the cornering stiffness of the front wheels of an associated road vehicle, see also "R. Rajamani, Vehicle Dynamics and Control, Springer, 2006." for further elaboration.

In reality it will be appropriate to base the wheel self-aligning torque curves of figure 2 on low-friction tires, i.e. tires providing a worst-case assumption of the wheel self-aligning torque.

A hands-off situation gives, using equation 1 above, that the pinion angle acceleration $\ddot{\delta}_w$ will be a function of the difference between the overlay torque $\tau_A$ and the self-aligning torque $f_R$ as

$$J\ddot{\delta}_w = \tau_A - f_R(\delta_w, v) \tag{2}$$

and pinion angle jerk is given by

$$J\dddot{\delta}_w = \dot{\tau}_A - \frac{\partial f_R(\delta_w, v)}{\partial \delta_w} \dot{\delta}_w \tag{3}$$

Note that the bicycle model gives that the pinion angle $\delta_w$ is linearly related to the lateral acceleration of the vehicle 1.

Before describing the safety mechanisms it is important to study the lane departure hazard and to define the worst case fault in the overlay torque. Since the driver is the primary safety mechanism who will intervene and take over the vehicle 1 in case of a fault, the technical safety concept must guarantee that the driver will have time to react and when the driver is in control of the vehicle 1, that the maximum torque in the steering wheel can be easily counteracted by a weak driver. Since the vehicle 1 can be in a curve when the fault occurs, it is important to focus on the change in pinion angle relative to the initial pinion angle. It is this difference that will cause a lateral acceleration relative to the initial path of the vehicle 1.

It is obvious that the required reaction time will depend on the maximum pinion angle acceleration $\ddot{\delta}_w$ and pinion angle jerk $\dddot{\delta}_w$; by limiting the maximum pinion angle acceleration $\ddot{\delta}_w$ and pinion angle jerk $\dddot{\delta}_w$ for the worst case fault, it will take longer time before the fault has caused a large offset in the lateral acceleration relative to the initial path of the vehicle 1.

From equation (2) above one can see that in the hands off situation pinion angle acceleration $\ddot{\delta}_w$ is caused by the difference between the wheel self-aligning torque $f_R$ and the overlay torque $\tau_A$.

From equation (3) above one can see that the pinion angle jerk $\dddot{\delta}_w$ depends on the time derivative of the overlay torque $\tau_A$.

The new safety concept relies on the following two new safety mechanisms.

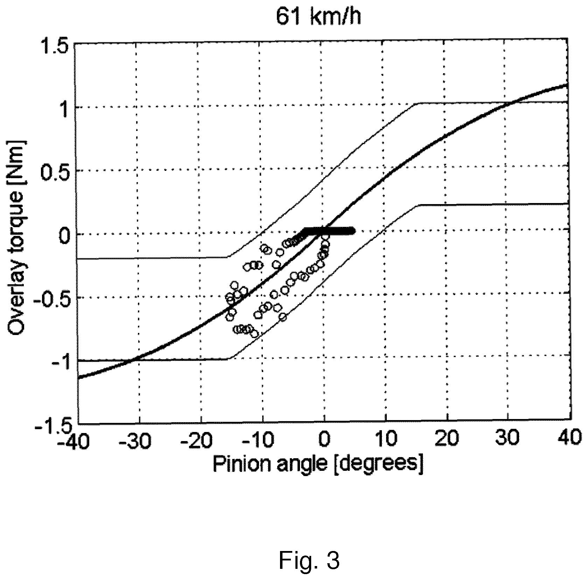

Firstly, in order to limit the pinion angle acceleration $\ddot{\delta}_w$ we propose that the overlay torque $\tau_A$ should be limited to be in an interval symmetric around the modeled wheel self-aligning torque $f_R$. The allowed torque interval is called the safe set, see Figure 3 for an example of a safe set for hands-off driving at 61 km/h. The safe set area, bordered by the thinner lines, is the allowed state space which is symmetric around the wheel self-aligning torque $f_R$ for overlay torques $\tau_A$ in the interval $\pm$ 1 Nm, which self-aligning torque curve is showed with a slightly thicker line. The rings are measurements from an eLKA intervention. As evident from figure 3, as safe set as shown here makes it possible to allow overlay torques $\tau_A$ exceeding 0.5 Nm and approaching 1 Nm, i.e. allowing high overlay torque $\tau_A$ without increasing the risk for unwanted lane departures enabling improved versions of Pilot Assist and eLKA. In order to provide robustness against variations in the wheel self-aligning torque $f_R$ the safe set could be modified to be narrower for higher absolute values of the pinion angle $\delta_w$.

The safe set is dependent of the vehicle 1 speed $v$ which means that the minimum and maximum allowed torque limits will depend on both the pinion angle $\delta_W$ and the vehicle 1 speed $v$. Both of these signals are currently normally provided with Automotive Safety Integrity Level D (ASIL-D integrity). The width of the interval will decide the maximum magnitude of the pinion angle acceleration $\ddot{\delta}_w$. The interval width should be tuned so that the driver has time enough to intervene and take control of the vehicle 1 in case of a worst-case fault in the overlay torque. In order to tune the interval width appropriately it is suggested to use a test panel, where the members of the test panel must be able to handle injected torque overlay faults in order to be considered a safe interval width.

Secondly, in order to prevent rapid increase of the pinion angle acceleration $\ddot{\delta}_w$, we propose that the movement of the upper and lower limit of the allowed overlay torque $\tau_A$ interval should be rate limited. The rate limitation should be tuned so that the driver of an associated road vehicle 1 has enough time to react in case of a worst-case fault in the overlay torque $\tau_A$. Also, in order to tune the rate limitation appropriately it is suggested to use the test panel, as described above.

The reason for imposing a rate limitation on the movement of the upper and lower limit of the allowed overlay torque $\tau_A$ interval rather than a more direct rate limitation of the overlay torque $\tau_A$ is that an angle controller must in normal operation be allowed to do high frequency changes of the overlay torque $\tau_A$ in order to cancel two oscillating modes that are caused by the elasticity of the tires of the associated road vehicle 1 and the mass and spring stiffness of the steering column and steering wheel of the associated road vehicle 1. Without the ability to cancel these oscillating modes the bandwidth and general performance of the angle controller would have to be decreased in order to avoid large overshoots and oscillations.

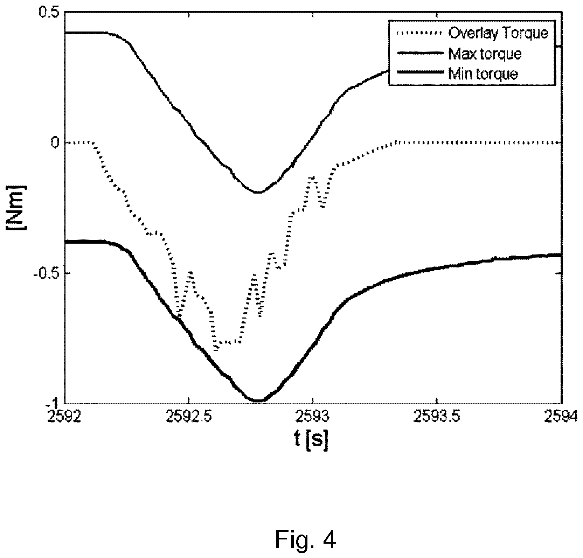

In order to provide some preliminary understanding of how to tune the new safety concept it is worthwhile to study a measurement log from a collision avoidance maneuver at 61 km/h with the vehicle 1 pointing straight towards a stationary target, see Figure 3 which plots the measurement on top of the safe set, as described earlier, and Figure 4 that plots the measurement in time together with the minimum and maximum torque interval based on the assumption that the rate limitation is higher than what was required in the log. In figure 4 is shown the movement in time of the upper and lower torque limits during an eLKA intervention at 61 km/h with a torque interval width of 0.8 Nm. Note that since the torque limits are not rate limited in the measurements, the limits are symmetric around the self alignment torque (which is not shown in the figure). From figures 3 and 4 and the measurements it can thus be concluded that the eLKA intervention would not be limited from a tuning where the torque interval equals 0.8 Nm and the maximum rate for the torque limits equals 0.9 Nm/s.

In the hands-off application, the allowed torque interval should in stationarity be centered symmetrically around the self-alignment torque $f_R$, which means that the movement of the torque interval is driven by the pinion angle $\delta_W$. However, when the pinion angle $\delta_W$ is moving fast, the movement of the torque interval can reach the rate limitation, causing the center point of the torque interval to lag behind the self alignment torque $f_R$.

In the hands-on application we propose a different implementation where the center point of the torque interval follows the overlay torque request $\tau_R$ instead of centering around the self alignment torque $f_R$. The reason is that in a hands-on application with Driver In the Loop functionality (DIL-functionality), it is desirable if the overlay torque $\tau_A$ can have both a positive and a negative sign, even when the vehicle 1 is in a tight curve. This as the DIL-functionality decides whether or not the driver should be treated as a disturbance or if the controller should fade out and hand over control to the driver. The need for a different implementation in the hands-on scenario is easily understood by imagining an eLKA intervention that is initiated in curve and in a situation where the driver is providing most of the self-alignment torque. Without the ability to provide both positive and negative torque in curves, the eLKA intervention would only be able to act inwards and tighten the curve radius.

The change in implementation for the hands-on scenario is justified by that the worst case scenario is different compared to hands-off driving. For hands-on driving the argument is that the driver will hold tighter on the steering wheel when in a curve. This means that the worst case scenario is considered to be a fault in the overlay torque when the vehicle 1 is driving on a straight road. It is therefore of primary concern that the safety concept is able to limit the wheel angle acceleration in the direction that causes the absolute value of the wheel angle to increase, i.e. to limit the pinion angle acceleration $\ddot{\delta}_w$ in the direction that causes the absolute value of the pinion angle $\delta_W$ to increase.

Thus, for the hands-on application the safety concept is constructed based on the following four requirements which are listed according to priority:

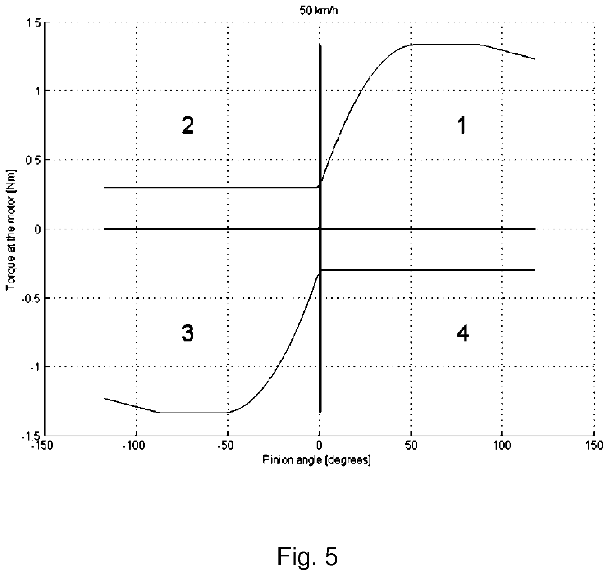

1. The upper and lower limit of the allowed torque interval must both be within a safe set. The idea of the safe set is to limit the pinion angle acceleration $\ddot{\delta}_w$ in the direction that causes the absolute value of the pinion angle $\delta_W$ to increase, see example in Figure 5.

2. The movement of the upper and lower limit of the allowed torque interval are both rate limited.

3. The lower limit is at least one torque interval below the maximum torque of the safe set and the upper limit is one torque interval above the lower limit of the safe set.

4. The upper and lower torque limits are symmetric around the overlay torque request $\tau_R$.

If the above requirements are in conflict at a given moment only the requirement with the highest priority will hold to be true.

Figure 5 shows an example of the safe set of the safety concept in a hands-on driving application. The safe set is shaped by the self-alignment torque $f_R$ only in quadrant 1 and 3. In quadrant 2 and 4 the minimum/maximum torque is set to assure that the driver can experience torque in both direction in the situation when the driver is providing the complete self alignment torque.

Note that the hands-on implementation described above may also be safe to use for hands-off applications provided a suitable tuning.

Thus, proposed herein is a method for safe limiting of torque overlay intervention in a power assisted steering system of a road vehicle 1 having an autonomous steering function arranged to selectively apply a steering wheel overlay torque $\tau_A$ to a normal steering assistance torque $\tau_S$.

The proposed method comprises the steps of:

modeling a wheel self-aligning torque $f_R$ of the road vehicle 1 for a current vehicle 1 velocity $v$ and pinion angle $\delta_w$;

receiving a steering wheel overlay torque request $\tau_R$;

providing, based on the received steering wheel overlay torque request $\tau_R$, a steering wheel overlay torque $\tau_A$ in hands-off applications limited to a safe set interval that is symmetrical around the modeled wheel self-aligning torque $f_R$, as described above.

In some embodiments the method further comprises the step of providing, based on the steering wheel overlay torque request $\tau_R$, a steering wheel overlay torque $\tau_A$ in hands-on applications limited to a safe set interval where a center point of the safe set interval is arranged to follow the steering wheel overlay torque request $\tau_R$.

In yet further embodiments the method further comprises the step of determining the safe set interval such that the minimum and maximum allowed torque limits are dependent on both current vehicle 1 velocity $v$ and pinion angle $\delta_w$.

According to still further embodiments the method further comprises the step of tuning the width of the safe set interval, that decides a maximum magnitude of pinion angle acceleration $\ddot{\delta}_w$, such that a driver of an associated road vehicle 1 is given time to intervene and take control of the road vehicle 1 in case of a worst-case fault in the overlay torque $\tau_A$.

In still further embodiments the method further comprises the step of rate limiting an upper and a lower limit of the allowed steering wheel overlay torque $\tau_A$ interval in order to prevent rapid increase in pinion angle acceleration $\ddot{\delta}_w$, such that a driver of an associated road vehicle 1 is given time to intervene and take control of the road vehicle 1 in case of a worst-case fault in the overlay torque $\tau_A$.

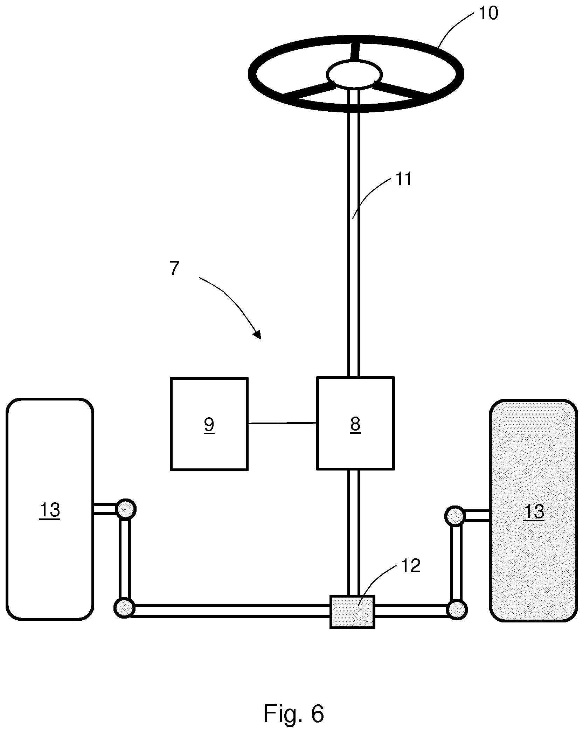

Further, in accordance with the present application is also envisaged an arrangement 7 for safe limiting of torque overlay intervention in a power assisted steering system 8 of a road vehicle 1, as illustrated schematically in figure 6, having an autonomous steering function arranged to selectively apply a steering wheel overlay torque $\tau_A$ to a normal steering assistance torque $\tau_S$.

The proposed arrangement 7 further comprises:
a steering wheel overlay torque controller 9 arranged to:

- model a wheel self-aligning torque $f_R$ of the road vehicle 1 for a current vehicle 1 velocity $v$ and pinion angle $\delta_w$;
- receive a steering wheel overlay torque request $\tau_R$; and
- provide, based on the received steering wheel overlay torque request $\tau_R$, a steering wheel overlay torque $\tau_A$ in hands-off applications limited to a safe set interval that is symmetrical around the modeled wheel self-aligning torque $f_R$.

Figure 6 illustrates schematically how the proposed arrangement 7 comprises the steering wheel overlay torque controller 9 arranged to control an EPAS actuator 8 to provide an overlay torque $\tau_A$ to the steerable wheels 13 of the vehicle 1 via the pinion gear 12.

In further embodiments of the arrangement 7 the steering wheel overlay torque controller 9 is further arranged to provide, based on the steering wheel overlay torque request $\tau_R$, a steering wheel 10 overlay torque $\tau_A$ in hands-on applications limited to a safe set interval where a center point of the safe set interval is arranged to follow the steering wheel overlay torque request $\tau_R$.

According to some further embodiments of the arrangement 7 the steering wheel 10 overlay torque controller 9 is further arranged to determine the safe set interval such that the minimum and maximum allowed torque limits are dependent on both current vehicle 1 velocity $v$ and pinion angle $\delta_w$.

In still further embodiments of the arrangement 7 the steering wheel 10 overlay torque controller 9 is further arranged to tune the width of the safe set interval, that decides a maximum magnitude of pinion angle acceleration $\ddot{\delta}_w$, such that a driver of an associated road vehicle 1 is given time to intervene and take control of the road vehicle 1 in case of a worst-case fault in the overlay torque $\tau_A$.

According to some yet further embodiments of the arrangement 7 the steering wheel 10 overlay torque controller 9 is further arranged to rate limit an upper and a lower limit of the allowed steering wheel overlay torque interval in order to prevent rapid increase in pinion angle acceleration $\ddot{\delta}_w$, such that a driver of an associated road vehicle 1 is given time to intervene and take control of the road vehicle 1 in case of a worst-case fault in the overlay torque $\tau_A$.

Further, in accordance with the present application is also envisaged a road vehicle 1 comprising an arrangement for safe limiting of torque overlay intervention in a power assisted steering system thereof, this road vehicle 1 having an autonomous steering function arranged to selectively apply a steering wheel overlay torque $\tau_A$ to a normal steering assistance torque $\tau_S$, as described in the foregoing.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. Method for safe limiting of torque overlay intervention in a power assisted steering system of a road vehicle (1) having an autonomous steering function arranged to selectively apply a steering wheel overlay torque ($\tau_A$) to a normal steering assistance torque ($\tau_S$),
**characterized in that** it comprises the steps of:

   modeling a wheel self-aligning torque ($f_R$) of the road vehicle (1) for a current vehicle velocity ($v$) and pinion angle ($\delta_w$);

receiving a steering wheel overlay torque request ($\tau_R$);

providing, based on the received steering wheel overlay torque request ($\tau_R$), a steering wheel overlay torque ($\tau_A$) in hands-off applications limited to a safe set interval that is symmetrical around the modeled wheel self-aligning torque ($f_R$).

2. The method according to claim 1, **characterized in that** it further comprises the step of providing, based on the steering wheel overlay torque request ($\tau_R$), a steering wheel overlay torque ($\tau_A$) in hands-on applications limited to a safe set interval where a center point of the safe set interval is arranged to follow the steering wheel overlay torque request ($\tau_R$).

3. The method according to any one of claims 1-2, **characterized in that** it further comprises the step of determining the safe set interval such that the minimum and maximum allowed torque limits are dependent on both current vehicle velocity ($v$) and pinion angle ($\delta_w$).

4. The method according to any one of claims 1-3, **characterized in that** it further comprises the step of tuning the width of the safe set interval, that decides a maximum magnitude of pinion angle acceleration $(\ddot{\delta}_w)$, such that a driver of an associated road vehicle (1) is given time to intervene and take control of the road vehicle (1) in case of a worst-case fault in the overlay torque ($\tau_A$).

5. The method according to any one of claims 1-4, **characterized in that** it further comprises the step of rate limiting an upper and a lower limit of the allowed steering wheel overlay torque ($\tau_A$) interval in order to prevent rapid increase in pinion angle acceleration $(\ddot{\delta}_w)$, such that a driver of an associated road vehicle (1) is given time to intervene and take control of the road vehicle (1) in case of a worst-case fault in the overlay torque ($\tau_A$).

6. Arrangement (7) for safe limiting of torque overlay intervention in a power assisted steering system of a road vehicle (1) having an autonomous steering function arranged to selectively apply a steering wheel overlay torque ($\tau_A$) to a normal steering assistance torque ($\tau_S$),
   **characterized in that** it further comprises:
   a steering wheel overlay torque controller arranged to:

   model a wheel self-aligning torque ($f_R$) of the road vehicle (1) for a current vehicle velocity ($v$) and pinion angle ($\delta_w$);
   receive a steering wheel overlay torque request ($\tau_R$);
   provide, based on the received steering wheel overlay torque request ($\tau_R$), a steering wheel overlay torque ($\tau_A$) in hands-off applications limited to a safe set interval that is symmetrical around the modeled wheel self-aligning torque ($f_R$).

7. The arrangement (7) according to claim 6, **characterized in that** the steering wheel overlay torque controller further is arranged to provide, based on the steering wheel overlay torque request ($\tau_R$), a steering wheel overlay torque ($\tau_A$) in hands-on applications limited to a safe set interval where a center point of the safe set interval is arranged to follow the steering wheel overlay torque request ($\tau_R$).

8. The arrangement (7) according to any one of claims 6 to 7, **characterized in that** the steering wheel overlay torque controller further is arranged to determine the safe set interval such that the minimum and maximum allowed torque limits are dependent on both current vehicle velocity ($v$) and pinion angle ($\delta_w$).

9. The arrangement (7) according to any one of claims 6 to 8, **characterized in that** the steering wheel overlay torque controller further is arranged to tune the width of the safe set interval, that decides a maximum magnitude of pinion angle acceleration $(\ddot{\delta}_w)$, such that a driver of an associated road vehicle (1) is given time to intervene and take control of the road vehicle (1) in case of a worst-case fault in the overlay torque ($\tau_A$).

10. The arrangement (7) according to any one of claims 6 to 9, **characterized in that** the steering wheel overlay torque controller further is arranged to rate limit an upper and a lower limit of the allowed steering wheel overlay torque interval in order to prevent rapid increase in pinion angle acceleration $(\ddot{\delta}_w)$, such that a driver of an associated road vehicle (1) is given time to intervene and take control of the road vehicle (1) in case of a worst-case fault in the

overlay torque ($\tau_A$).

**11.** A road vehicle (1), **characterized in that** it comprises an arrangement (7) according to any one of claims 6 to 10.

**Patentansprüche**

**1.** Verfahren zur sicheren Begrenzung der Drehmomentüberlagerungsintervention in einem Servolenksystem eines Straßenfahrzeugs (1), das eine autonome Lenkfunktion aufweist, die dazu angeordnet ist, ein Lenkradüberlagerungsdrehmoment ($\tau_A$) selektiv auf ein normales Lenkunterstützungsdrehmoment ($\tau_S$) anzuwenden, **dadurch gekennzeichnet, dass** es die folgenden Schritte umfasst:

Modellieren eines Radselbstausrichtungsdrehmoments ($f_R$) des Straßenfahrzeugs (1) für eine aktuelle Fahrzeuggeschwindigkeit ($v$) und einen Ritzelwinkel ($\delta_W$); Empfangen einer Lenkradüberlagerungsdrehmomentanfrage ($\tau_R$);
Vorsehen eines Lenkradüberlagerungsdrehmoments ($\tau_A$) auf Grundlage der empfangenen Lenkradüberlagerungsdrehmomentanfrage ($\tau_R$) bei vollautomatischen Anwendungen, das auf ein sicheres eingestelltes Intervall begrenzt ist, das um das modellierte Radselbstausrichtungsdrehmoment ($f_R$) symmetrisch ist.

**2.** Verfahren nach Anspruch 1, **dadurch gekennzeichnet, dass** es ferner den Schritt des Vorsehens eines Lenkradüberlagerungsdrehmoments ($\tau_A$) auf Grundlage der Lenkradüberlagerungsdrehmomentanfrage ($\tau_R$) bei nicht vollautomatischen Anwendungen, das auf ein sicheres eingestelltes Intervall begrenzt ist, umfasst, wobei der Mittelpunkt des sicheren eingestellten Intervalls dazu angeordnet ist, der Lenkradüberlagerungsdrehmomentanfrage ($\tau_R$) zu folgen.

**3.** Verfahren nach einem der Ansprüche 1-2, **dadurch gekennzeichnet, dass** es ferner den Schritt des Bestimmens des sicheren eingestellten Intervalls umfasst, sodass der minimale und maximale zulässige Drehmomentgrenzwert sowohl von der aktuellen Fahrzeuggeschwindigkeit ($v$) als auch vom Ritzelwinkel ($\delta_W$) abhängig ist.

**4.** Verfahren nach einem der Ansprüche 1-3, **dadurch gekennzeichnet, dass** es ferner den Schritt des Anpassens der Breite des sicheren eingestellten Intervalls umfasst, die eine maximale Amplitude der Ritzelwinkelbeschleunigung ($\ddot{\delta}_W$) bestimmt, sodass ein Fahrer eines zugehörigen Straßenfahrzeugs (1) im Falle eines größten anzunehmenden Fehlers des Überlagerungsdrehmoments ($\tau_A$) genug Zeit hat, um einzugreifen und die Steuerung des Straßenfahrzeugs (1) zu übernehmen.

**5.** Verfahren nach einem der Schritte 1-4, **dadurch gekennzeichnet, dass** es ferner den Schritt des Begrenzens einer oberen und einer unteren Grenze des zulässigen Intervalls des Lenkradüberlagerungsdrehmoments ($\tau_A$) umfasst, um einen schnellen Anstieg der der Ritzelwinkelbeschleunigung ($\ddot{\delta}_W$) zu verhindern, sodass ein Fahrer eines zugehörigen Straßenfahrzeugs (1) im Falle eines größten anzunehmenden Fehlers des Überlagerungsdrehmoments ($\tau_A$) genug Zeit hat, um einzugreifen und die Steuerung des Straßenfahrzeugs (1) zu übernehmen.

**6.** Anordnung (7) zum sicheren Begrenzen der Drehmomentüberlagerungsintervention bei einem Servolenksystem eines Straßenfahrzeugs (1), das eine autonome Lenkfunktion aufweist, die dazu angeordnet ist, ein Lenkradüberlagerungsdrehmoment ($\tau_A$) selektiv auf ein normales Lenkunterstützungsdrehmoment ($\tau_S$) anzuwenden, **dadurch gekennzeichnet, dass** es ferner Folgendes umfasst: eine Lenkradüberlagerungsdrehmomentsteuerung, die dazu angeordnet ist:

ein Radselbstausrichtungsdrehmoment ($f_R$) des Straßenfahrzeugs (1) für eine aktuelle Fahrzeuggeschwindigkeit ($v$) und einen Ritzelwinkel ($\delta_W$) zu modellieren;
eine Lenkradüberlagerungsdrehmomentanfrage ($\tau_R$) zu empfangen;
ein Lenkradüberlagerungsdrehmoment ($\tau_A$) auf Grundlage der empfangenen Lenkradüberlagerungsdrehmomentanfrage ($\tau_R$) bei vollautomatischen Anwendungen, das auf ein sicheres eingestelltes Intervall begrenzt ist, das um das modellierte Radselbstausrichtungsdrehmoment ($f_R$) symmetrisch ist, vorzusehen.

**7.** Anordnung (7) nach Anspruch 6, **dadurch gekennzeichnet, dass** die Lenkradüberlagerungsdrehmomentsteuerung ferner dazu angeordnet ist, auf Grundlage der Lenkradüberlagerungsdrehmomentanfrage ($\tau_R$) ein Lenkradüberlagerungsdrehmoment ($\tau_A$) bei nicht vollautomatischen Anwendungen, das auf ein sicheres eingestelltes Intervall begrenzt ist, wobei der Mittelpunkt des sicheren eingestellten Intervalls dazu angeordnet ist, der Lenkradüberlagerungsdrehmomentanfrage ($\tau_R$) zu folgen, vorzusehen.

8. Anordnung (7) nach einem der Ansprüche 6 bis 7, **dadurch gekennzeichnet, dass** die Lenkradüberlagerungsdrehmomentsteuerung ferner dazu angeordnet ist, das sichere eingestellte Intervall so bestimmen, dass der minimale und maximale zulässige Drehmomentgrenzwert sowohl von der aktuellen Fahrzeuggeschwindigkeit ($v$) als auch vom Ritzelwinkel ($\delta_W$) abhängig ist.

9. Anordnung (7) nach einem der Ansprüche 6 bis 8, **dadurch gekennzeichnet, dass** die Lenkradüberlagerungsdrehmomentsteuerung ferner dazu angeordnet ist, die Breite des sicheren eingestellten Intervalls einzustellen, die eine maximale Amplitude der Ritzelwinkelbeschleunigung ($\ddot{\delta}_W$) bestimmt, sodass ein Fahrer eines zugehörigen Straßenfahrzeugs (1) im Falle eines größten anzunehmenden Fehlers des Überlagerungsdrehmoments ($\tau_A$) genug Zeit hat, um einzugreifen und die Steuerung des Straßenfahrzeugs (1) zu übernehmen.

10. Anordnung (7) nach einem der Ansprüche 6 bis 9, **dadurch gekennzeichnet, dass** die Lenkradüberlagerungsdrehmomentsteuerung ferner dazu angeordnet ist, eine obere und eine untere Grenze des zulässigen Intervalls des Lenkradüberlagerungsdrehmoments zu begrenzen, um einen schnellen Anstieg der Ritzelwinkelbeschleunigung ($\ddot{\delta}_W$) zu verhindern, sodass ein Fahrer eines zugehörigen Straßenfahrzeugs (1) im Falle eines größten anzunehmenden Fehlers des Überlagerungsdrehmoments ($\tau_A$) genug Zeit hat, um einzugreifen und die Steuerung des Straßenfahrzeugs (1) zu übernehmen.

11. Straßenfahrzeug (1), **dadurch gekennzeichnet, dass** es eine Anordnung (7) nach einem der Ansprüche 6 bis 10 umfasst.

**Revendications**

1. Procédé de sécurisation de limitation d'une intervention de superposition de couple dans un système de direction assistée d'un véhicule routier (1) comportant une fonction de direction autonome conçue pour appliquer de façon sélective un couple de superposition de volant de direction ($\tau_A$) à un couple d'assistance de direction normal ($\tau_S$), **caractérisé en ce qu'**il comprend les étapes suivantes :

   la modélisation d'un couple d'auto-alignement de roue ($f_R$) du véhicule routier (1) pour une vitesse ($v$) et un angle de pignon ($\delta_W$) courants du véhicule ;
   la réception d'une demande de couple de superposition de volant de direction ($\tau_R$) ;
   la fourniture, sur la base de la demande de couple de superposition de volant de direction reçue ($\tau_R$), d'un couple de superposition de volant de direction ($\tau_A$) dans des applications mains libres limitées à un intervalle sûr défini qui est symétrique autour du couple d'auto-alignement de roue modélisé ($f_R$).

2. Procédé selon la revendication 1, **caractérisé en ce qu'**il comprend en outre l'étape de fourniture, sur la base de la demande de couple de superposition de volant de direction ($\tau_R$), d'un couple de superposition de volant de direction ($\tau_A$) dans des applications mains libres limitées à un intervalle sûr défini dans lesquelles un point central de l'intervalle sûr défini est agencé pour suivre la demande de couple de superposition de volant de direction ($\tau_R$).

3. Procédé selon l'une quelconque des revendications 1 et 2, **caractérisé en ce qu'**il comprend en outre l'étape de détermination de l'intervalle sûr défini de sorte que les limites de couple minimale et maximale autorisées dépendent à la fois de la vitesse ($v$) et de l'angle de pignon ($\delta_W$) courants du véhicule.

4. Procédé selon l'une quelconque des revendications 1 à 3, **caractérisé en ce qu'**il comprend en outre l'étape de réglage de la largeur de l'intervalle sûr défini, qui décide une grandeur maximale de l'accélération de l'angle de pignon ($\ddot{\delta}_W$), de sorte qu'un pilote du véhicule routier associé (1) ait le temps d'intervenir et de prendre le contrôle du véhicule routier (1) en cas de défaut de pire cas du couple de superposition ($\tau_A$).

5. Procédé selon l'une quelconque des revendications 1 à 4, **caractérisé en ce qu'**il comprend en outre l'étape de limitation cinétique d'une limite supérieure et inférieure de l'intervalle autorisé du couple de superposition de volant de direction ($\tau_A$) afin d'empêcher une augmentation rapide de l'accélération de l'angle de pignon ($\ddot{\delta}_W$) de sorte

qu'un pilote du véhicule routier associé (1) ait le temps d'intervenir et de prendre le contrôle du véhicule routier (1) en cas de défaut de pire cas du couple de superposition ($\tau_A$).

6. Agencement (7) de sécurisation de limitation d'une intervention de superposition de couple dans un système de direction assistée d'un véhicule routier (1) comportant une fonction de direction autonome conçue pour appliquer de façon sélective un couple de superposition de volant de direction ($\tau_A$) à un couple d'assistance de direction normal ($\tau_S$),
**caractérisé en ce qu'**il comprend en outre :
un contrôleur de couple de superposition de volant de direction conçu pour :

modéliser un couple d'auto-alignement de roue ($f_R$) du véhicule routier (1) pour une vitesse ($v$) et un angle de pignon ($\delta_W$) courants du véhicule ;
recevoir une demande de couple de superposition de volant de direction ($\tau_R$) ;
fournir, sur la base de la demande de couple de superposition de volant de direction reçue ($\tau_R$), un couple de superposition de volant de direction ($\tau_A$) dans des applications mains libres limitées à un intervalle sûr défini qui est symétrique autour du couple d'auto-alignement de roue modélisé ($f_R$).

7. Agencement (7) selon la revendication 6, **caractérisé en ce que** le contrôleur de couple de superposition de volant de direction est en outre conçu pour fournir, sur la base de la demande de couple de superposition de volant de direction ($\tau_R$), un couple de superposition de volant de direction ($\tau_A$) dans des applications mains libres limitées à un intervalle sûr défini dans lesquelles un point central de l'intervalle sûr défini est agencé pour suivre la demande de couple de superposition de volant de direction ($\tau_R$).

8. Agencement (7) selon l'une quelconque des revendications 6 et 7, **caractérisé en ce que** le contrôleur de couple de superposition de volant de direction est en outre conçu pour déterminer l'intervalle sûr défini de sorte que les limites de couple minimale et maximale autorisées dépendent à la fois de la vitesse ($v$) et de l'angle de pignon ($\delta_W$) courants du véhicule.

9. Agencement (7) selon l'une quelconque des revendications 6 à 8, **caractérisé en ce que** le contrôleur de couple de superposition de volant de direction est en outre conçu pour régler la largeur de l'intervalle sûr défini, qui décide une grandeur maximale de l'accélération de l'angle de pignon ($\ddot{\delta}_W$), de sorte qu'un pilote du véhicule routier associé (1) ait le temps d'intervenir et de prendre le contrôle du véhicule routier (1) en cas de défaut de pire cas du couple de superposition ($\tau_A$).

10. Agencement (7) selon l'une quelconque des revendications 6 à 9, **caractérisé en ce que** le contrôleur de couple de superposition de volant de direction est en outre conçu pour limiter cinétiquement une limite supérieure et inférieure de l'intervalle autorisé du couple de superposition de volant de direction afin d'empêcher une augmentation rapide de l'accélération de l'angle de pignon ($\ddot{\delta}_W$) de sorte qu'un pilote du véhicule routier associé (1) ait le temps d'intervenir et de prendre le contrôle du véhicule routier (1) en cas de défaut de pire cas du couple de superposition ($\tau_A$).

11. Véhicule routier (1), **caractérisé en ce qu'**il comprend un agencement (7) selon l'une quelconque des revendications 6 à 10.

Fig. 1

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2905206 A1

**Non-patent literature cited in the description**

- **T. D. GILLESPIE.** Fundamentals of Vehicle Dynamics. Society of Automotive Engineers, 1992

- **R. RAJAMANI.** Vehicle Dynamics and Control. Springer, 2006